# EUROPÄISCHE PATENTSCHRIFT

(11) **EP 3 837 130 B1**
(45) Veröffentlichungstag und Bekanntmachung des Hinweises auf die Patenterteilung: **07.12.2022**
(21) Anmeldenummer: 19755830.7
(22) Anmeldetag: 01.08.2019
(51) Int. Cl.: B60K 6/48, B60K 6/365, B60K 6/547, F16H 3/66, F16H 37/04, F16H 61/04, B60K 6/36

(54) **ANTRIEBSANORDNUNG FÜR EIN FAHRZEUG MIT ZWEI GLEICHWERTIGEN FAHRTRICHTUNGEN UND VERFAHREN ZUM BETREIBEN EINES SOLCHEN FAHRZEUGS**
DRIVE ASSEMBLY FOR A VEHICLE HAVING TWO EQUIVALENT DIRECTIONS OF TRAVEL AND METHOD FOR OPERATING SUCH A VEHICLE
ENSEMBLE DE PROPULSION POUR UN VÉHICULE AYANT DEUX SENS DE DÉPLACEMENT ÉQUIVALENTS ET PROCÉDÉ POUR FAIRE FONCTIONNER UN TEL VÉHICULE

(30) Priorität: 13.08.2018 DE 102018213561
(43) Veröffentlichungstag der Anmeldung: 23.06.2021
(73) Patentinhaber: ZF Friedrichshafen AG, 88046 Friedrichshafen (DE)
(72) Erfinder: GEBHARD, Wolfgang, 88048 Friedrichshafen (DE); SCHOLZ, Nikolaus, 88138 Sigmarszell (DE)
(74) Vertreter: ZF Friedrichshafen AG
(86) Internationale Anmeldenummer: PCT/EP2019/070765
(87) Internationale Veröffentlichungsnummer: WO 2020/035323

(56) Entgegenhaltungen:
- DE-A1-102011 081 765
- US-A1- 2009 149 292

## Beschreibung

Die Erfindung betrifft eine Antriebsanordnung für ein Fahrzeug mit zwei gleichwertigen Fahrtrichtungen nach dem Oberbegriff des Anspruches 1 und ein Verfahren zum Betreiben eines solchen Fahrzeugs nach dem Oberbegriff des Anspruchs 6. Insbesondere Schienenfahrzeuge weisen häufig zwei gleichwertige Fahrtrichtungen auf. Das heißt, dass sie in einer ersten Fahrtrichtung in den gleichen Geschwindigkeitsbereichen bzw. Gängen betrieben werden können wie in einer dazu entgegengesetzten zweiten Fahrtrichtung. Die erste Fahrtrichtung und die zweite Fahrrichtung können auch als Vorwärtsfahrtrichtung und Rückwärtsfahrtrichtung bezeichnet werden. Die zwei gleichwertigen Fahrtrichtungen werden beispielsweise dadurch bewirkt, dass im Antriebstrang zwischen einem Wechselgetriebe und einem Radsatzgetriebe ein Wendegetriebe oder eine Wendegetriebestufe angeordnet wird. Durch die im Wendegetriebe bewirkte Drehrichtungsumkehr können alle von dem Wechselgetriebe bereitgestellten Gänge in beiden Fahrtrichtungen genutzt werden.

In der EP 2 251 223 A2 ist ein Antriebsstrang für ein Fahrzeug mit zwei gleichwertigen Fahrtrichtungen beschrieben. Darin ist zusätzlich ein Nebenabtrieb beschrieben, der an einem unabhängig von einem Wechselgetriebe ausgebildeten Wendegetriebe angeordnet ist. Dadurch kann ein aus dem Nutzfahrzeugbereich bekanntes und übliches Wechselgetriebe und übliche Radsatzgetriebe verwendet werden, wodurch aufgrund hoher Stückzahlen ein erheblicher Kostenvorteil. Der Nebenabtrieb kann sowohl als Nebenabtrieb als auch als Nebenantrieb verwendet werden. Des Weiteren ist dort beschrieben, wie der Antriebsstrang mittels einer an den Nebenabtrieb angeschlossenen elektrischen oder hydrostatischen Maschine hybridisiert werden kann.

In der DE 10 2011 081 765 A1 ist ferner eine Antriebsanordnung mit einem Wechselgetriebe, einer nachgeschalteten Wendegetriebestufe und einem Nebenantrieb beschrieben.

Es ist die Aufgabe der vorliegenden Erfindung eine verbesserte Antriebsanordnung für ein Fahrzeug mit zwei gleichwertigen Fahrtrichtungen und mit einem Nebenantrieb bereitzustellen. Ferner soll ein Verfahren zum Betreiben eines solchen Fahrzeugs angegeben werden.

Diese Aufgaben werden gelöst durch eine Antriebsanordnung mit den Merkmalen des Anspruchs 1 und durch ein Verfahren nach Anspruch 8. Vorteilhafte Ausführungen sind in den jeweiligen abhängigen Ansprüchen angegeben.

Demnach wird eine Antriebsanordnung für ein Fahrzeug mit zwei gleichwertigen Fahrtrichtungen vorgeschlagen, die ein Wechselgetriebe und eine im Leistungsfluss nach dem Wechselgetriebe angeordnete Wendegetriebestufe umfasst.

Das Wechselgetriebe umfasst eine Eingangswelle zum Einleiten einer Antriebsleistung und zumindest ein Lastschaltelement. In dem Wechselgetriebe können verschiedene Drehzahlübersetzungen bzw. Gänge geschaltet werden. Das Wechselgetriebe kann beispielsweise als Automatgetriebe mit einem hydrodynamischen Drehmomentwandler und mehreren Planetenradsätzen zur Bereitstellung mehrerer Gänge ausgeführt sein. Ein solches Getriebe wird auch häufig bei Stadtbussen eingesetzt und verwendet zum Anfahren den hydrodynamischen Drehmomentwandler.

Die Eingangswelle des Wechselgetriebes kann mit einer Motorwelle eines Hauptantriebsmotors des gesamten Antriebsstrangs verbunden werden. Die Motorwelle des Hauptantriebsmotors überträgt im Betrieb eine Antriebsleistung in Form von Drehmoment und Drehbewegung auf die Eingangswelle des Wechselgetriebes. Der Hauptantriebsmotor kann als Verbrennungsmotor, insbesondere als Dieselmotor ausgebildet sein. Die Eingangswelle leitet die Antriebsleistung in das Wechselgetriebe ein, wo mithilfe von zumindest einem Schaltelement jeweils ein ausgewählter Gang einstellbar ist. Vorzugsweise können alle Schaltelemente des Wechselgetriebes als Lastschaltelemente ausgeführt sein. Mit Lastschaltelementen können Schaltungen ohne eine Zugkraftunterbrechung durchgeführt werden. Als Lastschaltelemente können reibschlüssige Kupplungen und Bremsen eingesetzt werden, insbesondere in Form von Lamellenkupplungen bzw. Lamellenbremsen. Sind die Lastschaltelemente in dem Wechselgetriebe alle geöffnet, so kann kein Drehmoment von der Eingangswelle zu einer Ausgangswelle übertragen werden und der Hauptantriebsmotor kann abgeschaltet werden. Ein solcher Fahrzustand des Antriebstrangs kann gezielt eingestellt werden, um Energie zu sparen. Dieser Fahrzustand wird auch als Segeln bezeichnet.

Die Wendegetriebestufe umfasst mehrere Zahnräder, sowie mindestens eine Schalteinrichtung und eine Abtriebswelle. Die Zahnräder dienen der Drehrichtungsumkehr zur Realisierung der beiden entgegengesetzten Fahrtrichtungen. Dazu sind verschiedene Anordnungen der Zahnräder in der Wendegetriebestufe möglich. Die Wendegetriebestufe kann beispielsweise als Stirnradgetriebe in Vorgelegebauweise oder als Planetenradsatz ausgeführt sein.

Ferner ist an der Wendegetriebestufe zumindest ein Nebenantrieb angeordnet. Der Nebenantrieb ist permanent mit der Abtriebswelle der Wendegetriebestufe verbunden und durch die Schalteinrichtung von den genannten Zahnrädern der Wendegetriebestufe trennbar, wodurch der Antriebsstrang von dem Wechselgetriebe zu der Abtriebswelle unterbrochen werden kann. Die Abtriebswelle und damit das Fahrzeug können somit allein über den Nebenantrieb angetrieben werden, wenn der Nebenantrieb und die Abtriebswelle durch die Schalteinrichtung von den Zahnrädern der Wendegetriebestufe abgekoppelt ist. In einem solchen Fahrbetrieb entstehen keine Energieverluste durch mitgeschleppte Bauteile in dem Wechselgetriebe oder in der Wendegetriebestufe, weil diese durch die Schalteinrichtung von der Abtriebswelle und dem Nebenantrieb abgekoppelt sind. Wirkungsgradverluste durch Schleppverluste im Antriebsstrang können somit reduziert werden.

Der Nebenantrieb kann beispielsweise über eine Stirnradstufe mit der Abtriebswelle permanent verbunden sein. Die Schalteinrichtung zur An- und Abkopplung des Nebenantriebs kann unabhängig von einer weiteren Schalteinrichtung zur Drehrichtungsumkehr ausgebildet sein.

Vorzugsweise umfasst die Wendegetriebestufe jedoch lediglich eine Schalteinrichtung, die sowohl zur Drehrichtungsumkehr als auch zum An- und Abkoppeln des Nebenantriebs genutzt wird. Auf diese Weise können mit einer einzigen Schalteinrichtung die Drehrichtungsumkehr und die Abkopplung des Nebenantriebs von der Hauptantriebsseite geschaltet werden. Dies vereinfacht die Ansteuerung und den Aufbau der Antriebsanordnung. Es sind weniger Bauteile und weniger Schnittstellen zur Ansteuerung der Schalteinrichtung erforderlich.

Erfindungsgemäß ist die Schalteinrichtung eine formschlüssige Schalteinrichtung, die eine erste Schaltstellung für eine erste Fahrtrichtung, eine zweite Schaltstellung für eine zweite Fahrtrichtung und eine dritte Schaltstellung, nämlich eine Neutralstellung aufweist. In der Neutralstellung ist die Antriebsverbindung zum Hauptantriebsmotor unterbrochen. Eine solche formschlüssige Schalteinrichtung kann im Leistungsfluss zwischen den Zahnrädern der Wendegetriebestufe und der Abtriebswelle angeordnet sein, sodass in der Neutralstellung kein Zahnrad der Wendegetriebestufe mit der Abtriebswelle verbunden ist. Somit ist auch die Triebverbindung zwischen dem Wechselgetriebe und den Antriebsrädern des Fahrzeugs an dieser Stelle unterbrochen. Der Nebenantrieb bleibt in der genannten Neutralstellung jedoch mit der Abtriebswelle verbunden.

Die Antriebsanordnung umfasst ferner eine Steuereinrichtung, mit der die Schaltvorgänge gesteuert werden. Die Steuereinrichtung umfasst elektronische Elemente wie zumindest einen Prozessor und zumindest einen Datenspeicher. Die Steuereinrichtung kann über entsprechende Schnittstellen mit einer zentralen Fahrzeugsteuerung und mit einer mechatronischen Schaltsteuerung der Antriebsanordnung verbunden sein. Mithilfe der elektronischen Steuereinrichtung können beispielsweise hydraulische Ventile in der Schaltsteuerung angesteuert werden, mit deren Hilfe die die hydraulische Betätigung der Lastschaltelemente in dem Wechselgetriebe und der Schalteinrichtung der Wendegetriebestufe bewirkt wird. Die elektronische Steuereinrichtung und die mechatronische Schaltsteuerung sind vorzugsweise unmittelbar an oder in einem Gehäuse der Antriebsanordnung angeordnet.

Zur Verbesserung der Schaltvorgänge an der formschlüssigen Schalteinrichtung ist die Steuereinrichtung dazu eingerichtet eine antriebsseitige Drehzahl und eine abtriebsseitige Drehzahl an der formschlüssigen Schalteinrichtung zu synchronisieren. Dazu wird die antriebsseitige Drehzahl durch teilweises Schließen des zumindest einen Lastschaltelements in dem Wechselgetriebe an die abtriebsseitige Drehzahl angeglichen. Bei einem Automatgetriebe als Wechselgetriebe kann also beispielsweise eine Lamellenkupplung zeitweise schleifend betrieben werden, sodass die von der Drehzahl des Hauptantriebsmotors abhängige antriebsseitige Drehzahl an der formschlüssigen Schalteinrichtung gezielt an die abtriebsseitige Drehzahl angeglichen wird. Die formschlüssige Schalteinrichtung kann insbesondere als Klauenschaltkupplung ausgeführt sein. Mithilfe der genannten Steuereinrichtung und eines von ihr angesteuerten Lastschaltelements in dem Wechselgetriebe können also beim Schließen der Klauenschaltkupplung die Drehzahlen der zu verbindenden Kupplungsverzahnungen aneinander angepasst werden. Auf diese Weise kann ein zügiges und ruckfreies Umschalten an der formschlüssigen Schalteinrichtung erreicht werden. Erforderlichenfalls können auch sogenannte Zahn-auf-Zahn-Stellungen beim Einkuppeln einer Triebverbindung an der formschlüssigen Schalteinrichtung mithilfe einer gezielten Ansteuerung eines Lastschaltelements in dem Wechselgetriebe aufgelöst werden. Dabei wird die antriebsseitige Drehzahl gegenüber der abtriebsseitigen Drehzahl leicht erhöht oder verringert, sodass sich blockierende Kupplungsverzahnungen der Klauenschaltkupplung soweit verdrehen, bis die Blockierung aufgelöst ist und sich die Kupplungsverzahnungen miteinander in Eingriff bringen lassen. Vor diesem Hintergrund ist bevorzugt vorgesehen, dass die Steuereinrichtung das Lastschaltelement erst dann vollständig schließt, wenn die zwei zu verbindenden Kupplungsverzahnungen der formschlüssigen Schalteinrichtung miteinander im Eingriff sind.

Mit Hilfe des Nebenantriebs kann das Fahrzeug entweder allein oder zusammen mit dem Hauptantriebsmotor angetrieben werden kann. Es handelt sich dabei also um einen Hybridantrieb.

Dazu ist der Nebenantrieb bevorzugt mit einer elektrischen Maschine verbindbar, wobei die elektrische Maschine als Motor und als Generator betreibbar ist und mit einer Speichereinrichtung oder einer Oberleitung verbindbar ist. Mit einer solchen hybridisierten Antriebsanordnung sind gegenüber herkömmlichen Antriebsanordnungen deutliche Energieeinsparungen möglich. Beim rein elektrischen Antrieb kann die Drehrichtungsumkehr durch zwei entgegengesetzte Antriebsrichtungen der elektrischen Maschine selbst bewirkt werden.

Im Folgenden werden verschiedene vorteilhafte Verfahren und Fahrmodi zum Betreiben eines Fahrzeugs mit einer solchen Antriebsanordnung näher erläutert. Die elektrische Maschine kann unmittelbar an einem Gehäuse der Wendegetriebestufe befestigt oder gar in ein Wendegetriebegehäuse oder in ein gemeinsames Gehäuse eines Wechselwendegetriebes integriert sein. Die elektrische Maschine kann aber auch unabhängig von der Wendegetriebestufe ausgebildet und beabstandet dazu angeordnet und über eine Welle mit dem Nebenantrieb in der Wendegetriebestufe verbunden sein. Die elektrische Maschine kann auch über eine zusätzliche schaltbare Kupplung an den Nebenantrieb angeschlossen sein, sodass zwar der Nebenantrieb permanent mit der Abtriebswelle verbunden ist, aber die elektrische Maschine bei Bedarf von dem Nebenantrieb abgekoppelt werden kann.

Alternativ zu einer elektrischen Maschine kann der Nebenantrieb auch mit einer hydraulischen Maschine verbunden werden, wobei die hydraulische Maschine als Motor und als Pumpe betreibbar ist und mit einer Speichereinrichtung verbunden werden kann. Derartige Antriebe werden auch hydrostatische Antriebe genannt. Auch diese sind in der Regel in zwei entgegengesetzten Drehrichtungen betreibbar, sodass eine Drehrichtungsumkehr durch die Wendegetriebestufe bei einem rein hydrostatischen Antrieb des Fahrzeugs ebenfalls nicht erforderlich ist.

Die Wendegetriebestufe kann entweder zusammen mit dem Wechselgetriebe in einem gemeinsamen Gehäuse untergebracht oder unabhängig von dem Wechselgetriebe als separates Wendegetriebe mit einem davon getrennten Gehäuse ausgebildet sein. Die erstgenannte Lösung erfordert weniger Bauraum und kann leichter ausgeführt werden. Die zweitgenannte Lösung hat den Vorteil, dass als Wechselgetriebe ein in Straßen- und Nutzfahrzeugen übliches Wechselgetriebe eingesetzt werden kann, welches dank hoher Stückzahlen deutlich kostengünstiger verfügbar ist als ein speziell für ein Fahrzeug mit zwei gleichwertigen Fahrtrichtungen entwickeltes und produziertes Getriebe.

Die vorliegende Erfindung umfasst ferner ein Verfahren zum Betreiben eines Fahrzeugs mit zwei gleichwertigen Fahrtrichtungen, wobei der Antriebsstrang des Fahrzeugs einen Hauptantriebsmotor, ein Wechselgetriebe und eine im Leistungsfluß nach dem Wechselgetriebe angeordnete Wendegetriebestufe umfasst. Das genannte Wechselgetriebe umfasst zumindest ein Lastschaltelement. Die Wendegetriebestufe umfasst mehrere Zahnräder zur Realisierung einer Fahrtrichtungsumkehr, mindestens eine Schalteinrichtung, eine Abtriebswelle zum Weiterleiten der Antriebsleistung zu den Antriebsrädern des Fahrzeugs und einen permanent mit der Abtriebswelle verbundenen Nebenantrieb.

Das vorgeschlagene Verfahren umfasst einen Fahrmodus, bei dem eine Triebverbindung zwischen dem Hauptantriebsmotor und der Abtriebswelle an der Schalteinrichtung an der Wendegetriebestufe getrennt ist, sodass das Fahrzeug lediglich über den Nebenantrieb antreibbar ist. Der Fahrmodus in dem nur über den Nebenantrieb angetrieben wird, kann dann genutzt werden, wenn die am Nebenantrieb zur Verfügung stehende Leistung ausreicht, um die gewünschte Geschwindigkeit des Fahrzeugs zu halten oder zu erreichen.

Im Zusammenhang mit der oben beschriebenen Antriebsanordnung ist von Vorteil, dass über den Nebenantrieb keine zusätzlichen Bauteile der Wendegetriebestufe oder des Wechselgetriebes von dem Hilfsantrieb mit angetrieben werden müssen. Der Fahrmodus, bei dem das Fahrzeug lediglich über den Nebenantrieb angetrieben wird, kann beispielsweise auch zeitlich direkt anschließend an den oben beschriebenen Fahrzustand des Segelns oder zwischen mehreren Segelphasen eingesetzt werden, sodass erheblich längere Fahrstrecken ohne den Einsatz des Hauptmotors befahren werden können. Dadurch kann der Energieverbrauch gesenkt werden. Der Wirkungsgrad des Hauptantriebsmotors wird erhöht, wenn der Nebenantrieb insbesondere im Teillastbetrieb alleine als Fahrantrieb genutzt wird, weil der Hauptantriebsmotor als Verbrennungsmotor insbesondere in Teillastbetrieb einen schlechten Wirkungsgrad aufweist.

Zum Zuschalten des Hauptantriebsmotors in den Fahrantrieb kann die Drehzahl des Hauptantriebsmotors unter Berücksichtigung der Übersetzungen im Antriebsstrang an die Drehzahl der Abtriebswelle angeglichen werden, bevor der Hauptantriebsmotor mittels der Schalteinrichtung mit der Abtriebswelle der Wendegetriebestufe verbunden wird. Eine verbleibende minimale Drehzahldifferenz kann beim Schließen der beispielsweise als Klauenkupplung ausgebildeten Schalteinrichtung hilfreich sein, um sogenannte Zahn-auf-Zahn-Stellungen aufzulösen. So kann ein zügiges und leises Schalten der formschlüssigen Schalteinrichtung erfolgen.

Um ein ruckfreies Umschalten an der formschlüssigen Schalteinrichtung zu gewährleisten, wird erfindungsgemäß ein Lastschaltelement in dem Wechselgetriebe zum Synchronisieren einer antriebsseitigen Drehzahl an der formschlüssigen Schalteinrichtung mit einer abtriebsseitigen Drehzahl zumindest teilweise geschlossen, bevor die Triebverbindung an der formschlüssigen Schalteinrichtung geschlossen wird. Mithilfe einer geeigneten Steuereinrichtung und eines von ihr angesteuerten Lastschaltelements in dem Wechselgetriebe können also die Drehzahlen der zu verbindenden Kupplungsverzahnungen in der Wendegetriebestufe beim Schließen der Klauenschaltkupplung aneinander angepasst werden.

Ein anderer Aspekt der Erfindung sieht vor, dass der Nebenantrieb in bestimmten Fahrmodi auch als Nebenabtrieb genutzt werden kann. Eine weitere Ausführung des Verfahrens sieht demnach vor, dass bei Betrieb in einem Fahrmodus bei welchem die Triebverbindung zwischen dem Hauptantriebsmotor und der Abtriebswelle an der Schalteinrichtung verbunden ist, der Nebenantrieb eine elektrische Maschine antreibt, welche als Generator betrieben wird und Energie in eine Speichereinrichtung oder eine Oberleitung speist. Zusätzlich kann die von der elektrischen Maschine generierte elektrische Leistung auch zum Antrieb anderer Aggregate in dem Schienenfahrzeug genutzt werden. Bevorzugt wird die elektrische Maschine als Generator betrieben, wenn das Fahrzeug sich außerhalb eines Luftreinhaltungs- und Lärmschutzgebietes befindet und das Fahrzeug gebremst wird oder sich auf einer Gefällestrecke befindet.

Bei einem Betrieb in dem Fahrmodus, in welchem die Triebverbindung zwischen dem Hauptantriebsmotor und der Abtriebswelle an der Schalteinrichtung getrennt ist, treibt die elektrische Maschine das Fahrzeug über den Nebenantrieb an, wobei die elektrische Maschine als Motor betrieben wird. Dazu kann die elektrische Maschine die erforderliche elektrische Energie von der Speichereinrichtung oder von der Oberleitung erhalten.

Die elektrische Maschine wird vorteilhaft als Motor betrieben, wenn das Fahrzeug sich innerhalb eines Luftreinhaltungs- oder Lärmschutzgebietes befindet und der als Verbrennungsmotor ausgebildete Hauptantriebsmotor abgeschaltet ist. Auf diese Weise kann das Fahrzeug mit einer entsprechenden Antriebsanordnung vielseitig eingesetzt und insbesondere unabhängig von Regelungen zur Luftreinhaltung, Lärmschutz oder ähnlichen Bestimmungen auf allen Fahrstrecken eingesetzt werden.

Die elektrische Maschine kann auch dann vorteilhaft als Motor betrieben werden, wenn das Fahrzeug sich außerhalb eines Luftreinhaltungs- oder Lärmschutzgebietes befindet, der Hauptantriebsmotor das Fahrzeug antreibt und das Fahrzeug sich in einer Steigung befindet. Dabei unterstützt die elektrische Maschine den Hauptantriebsmotor und es kann eine größere Gesamtantriebsleistung genutzt werden.

Der Einsatz der elektrischen Maschine als Motor oder als Generator kann auch abhängig von der verfügbaren elektrischen Energie gesteuert werden. Die letztgenannte Unterstützung des Hauptantriebsmotors durch die elektrische Maschine zum Befahren einer Steigung kann beispielsweise abhängig davon eingesetzt werden, ob im weiteren Streckenverlauf in der genannten Speichereinrichtung oder über die Oberleitung noch genügend elektrische Energie zur Verfügung steht, um ein Luftreinhaltungs- oder Lärmschutzgebietes rein elektrisch zu durchfahren. Ein dazu geeignetes und bestimmtes Energiemanagementsystem kann beispielsweise auf Daten zum Ladezustand eines Energiespeichers, auf Positionsbestimmungsdaten mithilfe von GPS und auf weitere Daten zu Eigenschaften und Zustand der Fahrstrecke und auf weitere aktuelle Bedingungen wie Wetterdaten zugreifen. Solche Daten können auf einem Datenspeicher in dem Schienenfahrzeug und/oder von einem zentralen Datenspeicher abrufbar zur Verfügung gestellt werden.

Die im Zusammenhang mit einer elektrischen Maschine beschriebenen Verfahren sind entsprechend auch mit einer an dem Nebenantrieb angeschlossenen hydraulischen Maschine und mit einer damit verbundenen Speichereinrichtung umsetzbar.

Im Folgenden wird die Erfindung anhand des in der nachfolgenden Figur abgebildeten Ausführungsbeispiels näher erläutert.

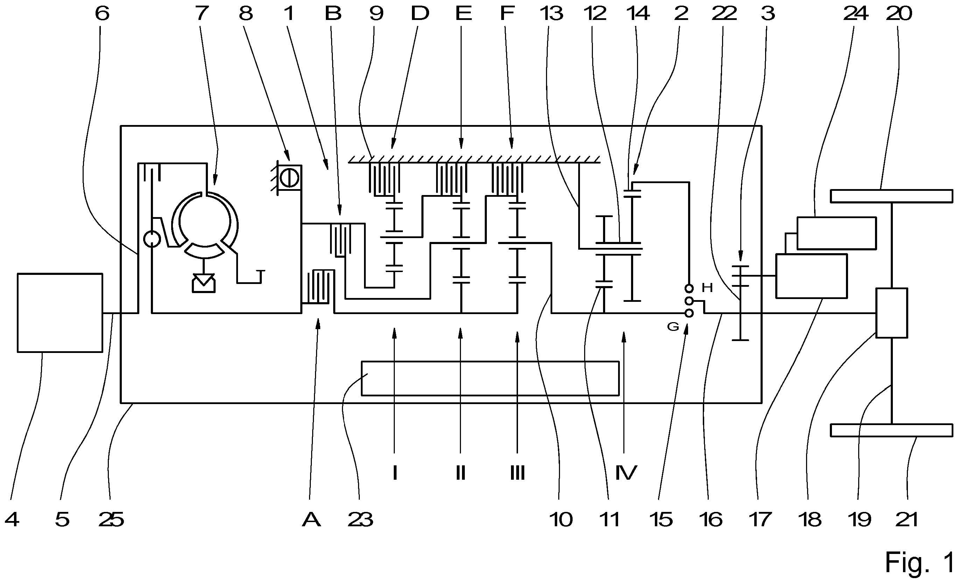

Dabei zeigt die
- Fig. 1: eine schematische Darstellung einer Ausführungsform einer erfindungsgemäßen Antriebsanordnung in einem Antriebsstrang eines Fahrzeugs.

Die Antriebsanordnung ist zum Antrieb eines Fahrzeugs mit zwei gleichwertigen Fahrtrichtungen in einem Antriebsstrang eines solchen Fahrzeugs angeordnet. Die Antriebsanordnung umfasst ein Wechselgetriebe 1, eine Wendegetriebestufe 2 und einen an der Wendegetriebestufe 2 angeordneten Nebenantrieb 3.

Das Wechselgetriebe 1 ist als Automatgetriebe mit einem hydrodynamischen Drehmomentwandler 7 und drei Planetenradsätzen I, II, III zur Bereitstellung mehrerer Gänge ausgeführt. Zusätzlich umfasst das Wechselgetriebe 1 eine hydrodynamische Bremse 8, auch Retarder genannt. Das Wechselgetriebe 1 weist eine Eingangswelle 6 zum Einleiten einer Antriebsleistung in das Wechselgetriebe 1 auf. Die Eingangswelle 6 ist antriebswirksam mit einer Motorwelle 5 eines Hauptantriebsmotors 4 verbunden. Der Hauptantriebsmotor 4 ist in diesem Ausführungsbeispiel ein Verbrennungsmotor.

Das Wechselgetriebe 1 weist ferner mehrere Lastschaltelemente A, B, D, E, F in Form von Lamellenkupplungen bzw. Lamellenbremsen auf. Mithilfe der Lastschaltelemente A, B, D, E, F können die Eingangswelle 6, die Elemente der Planetenradsätze I, II, III und ein in dem Fahrzeug feststehendes Gehäuse 9 gemäß einem vorgegebenen Schaltplan miteinander verbunden und getrennt werden, sodass von dem Wechselgetriebe 1 eine Mehrzahl an Gängen, d.h. Übersetzungen zur Verfügung gestellt werden kann.

Ein Planetenträger 10 des dritten Planetenradsatzes III bildet ein Verbindungselement zwischen dem dritten Planetenradsatz III und der Wendegetriebestufe 2. Die im Leistungsfluss nach dem Wechselgetriebe 1 angeordnete Wendegetriebestufe 2 umfasst den Planetenradsatz IV, der wiederum mehrere Zahnrädern umfasst, nämlich ein Sonnenrad 11, mehrere Planetenräder 12 und ein Hohlrad 14. Das Sonnenrad 11 ist verdrehfest mit einem Planetenträger 10 des dritten Planetenradsatzes III verbunden und bildet das Eingangselement des vierten Planetenradsatzes IV. Die Planetenräder 12 sind auf einem gehäusefesten Planetenträger 13 rotierbar gelagert. Die Planetenräder 12 sind jeweils als Stufenplanet ausgebildet. Jeder Stufenplanet weist eine erste Verzahnung auf, die mit der Verzahnung des Sonnenrads 11 im Eingriff steht, und eine zweite Verzahnung mit einem größeren Durchmesser, die mit der Innenverzahnung des Hohlrads 14 im Eingriff steht. Mittels der unterschiedlichen Durchmesser der Stufenplaneten kann eine Übersetzung des Planetenradsatzes IV von genau 1 eingestellt werden, wodurch die Abtriebsdrehzahl an der Abtriebswelle 16 gleich hoch ist, wie die Antriebsdrehzahl am Sonnenrad 11.

Die Fahrtrichtungsumkehr kann mittels einer formschlüssigen Schalteinrichtung 15 in der Wendegetriebestufe 2 bewirkt werden. Die formschlüssige Schalteinrichtung 15 der Wendegetriebestufe 2 umfasst zwei formschlüssige Schaltelemente G und H, die als zwei Kupplungsverzahnungen ausgebildet sein können. Zugleich entsprechen die beiden Bezugszeichen G und H zwei Schaltstellungen, nämlich einer ersten Schaltstellung G, in der das Fahrzeug in einer ersten Fahrtrichtung angetrieben wird, und einer zweiten Schaltstellung H, in der das Fahrzeug in einer dazu entgegengesetzten zweiten Fahrtrichtung angetrieben wird. Die formschlüssigen Schalteinrichtung 15 weist in dieser Ausführungsform zusätzlich eine dritte Schaltstellung, nämlich eine Neutralstellung auf. In der dritten Schaltstellung ist die Triebverbindung über die Schalteinrichtung 15 unterbrochen und die Abtriebswelle 16 ist von dem Wechselgetriebe 1 und von den Zahnrädern der Wendegetriebestufe 2 abgekoppelt. Damit ist auch die Triebverbindung zwischen dem Hauptantriebsmotor 4 und der Abtriebswelle 16 unterbrochen. Die beschriebenen drei Schaltstellungen der formschlüssigen Schalteinrichtung 15 können mittels einer nicht dargestellten Kolben-Zylinder-Einheit mit drei Positionen eingestellt werden.

In der ersten Schaltstellung G wird der Planetenträger 10 des dritten Planetenradsatzes III verdrehfest mit der Abtriebswelle 16 verbunden, sodass ein direkter Durchtrieb durch die Wendegetriebestufe 2 erfolgt. Der Planetenträger 10 des dritten Planetenradsatzes III und die Abtriebswelle 16 drehen in der gleichen Richtung. In der zweiten Schaltstellung H wird der Planetenträger 10 des dritten Planetenradsatzes III über den vierten Planetenradsatz IV mit der Abtriebswelle 16 verbunden, sodass die Antriebsleistung über die Zahnräder 11, 12, 14 des vierten Planetenradsatzes IV geführt und die Drehrichtung umgekehrt wird.

Die Abtriebswelle 16 ist permanent über ein Stirnradpaar 22 mit einem Nebenantrieb 3 verbunden. Der Nebenantrieb 3 ist mit einer elektrischen Maschine 17 verbunden, welche als Motor und als Generator betreibbar und mit einer Speichereinrichtung 24 verbunden ist. So kann die elektrische Maschine 17 Energie von der Speichereinrichtung 24 beziehen, wenn sie als Motor betrieben wird und Energie an die Speichereinrichtung 24 abgeben, wenn sie als Generator betrieben wird.

In der dritten Schaltstellung ist das Fahrzeug also nur über den Nebenantrieb 3 antreibbar. Es ist demnach ein rein elektrischer Antrieb des Fahrzeugs mittels der elektrischen Maschine 17 möglich. Mit dieser Antriebsart bzw. in diesem Fahrmodus kann das Fahrzeug auch in Luftreinhaltungsgebieten oder Lärmschutzgebieten fahren, in denen eine Fahrt mit einem laufenden Verbrennungsmotor verboten ist.

In anderen Ausführungsformen kann die Schalteinrichtung 15 zum Abkoppeln des der Nebenantriebs 3 und der Abtriebswelle 16 von den Zahnrädern der Wendegetriebestufe 2 auch separat von einer weiteren Schalteinrichtung zum Schalten der Drehrichtungsumkehr ausgebildet sein. An der weiteren Schalteinrichtung zum Schalten der Drehrichtungsumkehr sind dann nur zwei Schaltstellungen erforderlich.

Über die Abtriebswelle 16 der Wendegetriebestufe 2 wird die Antriebsleistung weitergeleitet zu einem Radsatzgetriebe 18, von wo die Antriebsleistung über eine Radsatzwelle 19 auf zwei Antriebsräder 20, 21 geleitet wird.

Die Wendegetriebestufe 2 ist in dem in der Fig. 1 gezeigten Ausführungsbeispiel zusammen mit dem Wechselgetriebe 1 in einem gemeinsamen Gehäuse 9 untergebracht. Somit können diese Bauteile als eine Baueinheit in Form eines kompakten Wechselwendegetriebes 25 bauraumsparend im Unterbau eines Schienenfahrzeugs untergebracht werden. Der Nebenantrieb 3 ist als ein Teil der Wendegetriebestufe 3 ebenfalls in dem gemeinsamen Gehäuse 9 untergebracht. Die elektrische Maschine 17 kann beispielsweise außen an dem gemeinsamen Gehäuse 9 befestigt sein.

Antriebsseitig kann das Wechselwendegetriebe 25 entweder unmittelbar an den Hauptantriebsmotor 4 angeordnet und befestigt sein, oder das Wechselwendegetriebe 25 ist beabstandet von dem Hauptantriebsmotors 4 angeordnet und über eine Gelenkwelle mit der Motorwelle 5 des Hauptantriebsmotors 4 verbunden. Das Wechselwendegetriebe 25 kann zusammen mit dem Hauptantriebsmotor 4 an einem tragenden Bauteil des Fahrzeugs insbesondere einem Fahrzeugrahmen befestigt sein.

Die Antriebsanordnung umfasst eine Steuereinrichtung 23, mit der Schaltungen in dem Wechselwendegetriebe 25 gesteuert werden. Die Steuereinrichtung 23 ist dazu eingerichtet eine antriebsseitige Drehzahl und eine abtriebsseitige Drehzahl an der formschlüssigen Schalteinrichtung 15 zu synchronisieren. Dazu wird die antriebsseitige Drehzahl, welche von der Drehzahl des Hauptantriebsmotors 4 generiert bzw. vorgegeben wird, durch teilweises Schließen eines Lastschaltelements A, B, D, E, F in dem Wechselgetriebe 1 an die abtriebsseitige Drehzahl angeglichen. Die Synchronisierung kann so genau gesteuert werden, dass die formschlüssige Schalteinrichtung 15 anschließend schnell und geräuschlos geschlossen werden kann.

Des Weiteren ist die Steuereinrichtung 23 so eingerichtet, dass die oben beschriebenen Verfahren mithilfe der Steuereinrichtung 23 durchführbar sind.

### Bezugszeichen

- 1: Wechselgetriebe
- 2: Wendegetriebestufe
- 3: Nebenantrieb
- 4: Hauptantriebsmotor
- 5: Motorwelle
- 6: Eingangswelle
- 7: Drehmomentwandler
- 8: hydrodynamische Bremse
- 9: Gehäuse
- 10: Planetenträger
- 11: Sonnenrad
- 12: Planetenrad
- 13: Planetenträger
- 14: Hohlrad
- 15: Schalteinrichtung
- 16: Abtriebswelle
- 17: elektrische Maschine
- 18: Radsatzgetriebe
- 19: Radsatzwelle
- 20: Antriebsrad
- 21: Antriebsrad
- 22: Stirnradpaar
- 23: Steuereinrichtung
- 24: Speichereinrichtung
- 25: Wechselwendegetriebe

- A, B, D, E, F: Lastschaltelemente
- G, H: formschlüssige Schaltelemente
- I, II, III, IV: Planetenradsätze

## Patentansprüche

1. Antriebsanordnung für ein Fahrzeug mit zwei gleichwertigen Fahrtrichtungen,
mit einem Wechselgetriebe (1), das eine Eingangswelle (6) zum Einleiten einer Antriebsleistung und zumindest ein Lastschaltelement (A, B, D, E, F) umfasst,
mit einer im Leistungsfluss nach dem Wechselgetriebe (1) angeordneten Wendegetriebestufe (2), die mehrere Zahnräder (11, 12, 14), mindestens eine Schalteinrichtung (15) und eine Abtriebswelle (16) umfasst,
und mit zumindest einem an der Wendegetriebestufe (2) angeordneten Nebenantrieb (3), wobei der Nebenantrieb (3) permanent mit der Abtriebswelle (16) verbunden und durch die Schalteinrichtung (15) von den Zahnrädern (11, 12, 14) der Wendegetriebestufe (2) trennbar ist, wobei die Schalteinrichtung (15) als formschlüssige Schalteinrichtung mit einer ersten Schaltstellung für eine erste Fahrtrichtung, einer zweiten Schaltstellung für eine zweite Fahrtrichtung und mit einer dritten Schaltstellung, nämlich einer Neutralstellung ausgeführt ist, **dadurch gekennzeichnet, dass** die Antriebsanordnung eine Steuereinrichtung (23) umfasst, die dazu eingerichtet ist eine antriebsseitige Drehzahl und eine abtriebsseitige Drehzahl an der formschlüssigen Schalteinrichtung (15) zu synchronisieren, indem die antriebsseitige Drehzahl durch teilweises Schließen des zumindest einen Lastschaltelements (A, B, D, E, F) in dem Wechselgetriebe (1) an die abtriebsseitige Drehzahl angeglichen wird.

2. Antriebsanordnung nach Anspruch 1, **dadurch gekennzeichnet, dass** die Steuereinrichtung (23) das zumindest eine Lastschaltelement (A, B, D, E, F) erst dann vollständig schließt, wenn zwei zu verbindende Kupplungsverzahnungen (G, H) der formschlüssigen Schalteinrichtung (15) miteinander im Eingriff sind.

3. Antriebsanordnung nach einem der vorgenannten Ansprüche, **dadurch gekennzeichnet, dass** der Nebenantrieb (3) mit einer elektrischen Maschine (17) verbindbar ist, welche als Motor und als Generator betreibbar ist und mit einer Speichereinrichtung (24) oder einer Oberleitung verbindbar ist.

4. Antriebsanordnung nach einem der vorgenannten Ansprüche, **dadurch gekennzeichnet, dass** der Nebenantrieb (3) mit einer hydraulischen Maschine verbindbar ist, welche als Motor und als Pumpe betreibbar ist und mit einer Speichereinrichtung verbindbar ist.

5. Antriebsanordnung nach einem der vorgenannten Ansprüche, **dadurch gekennzeichnet, dass** die Wendegetriebestufe (2) unabhängig von dem Wechselgetriebe (1) ausgebildet ist.

6. Verfahren zum Betreiben eines Fahrzeugs mit zwei gleichwertigen Fahrtrichtungen, wobei der Antriebsstrang des Fahrzeugs einen Hauptantriebsmotor (4), ein Wechselgetriebe (1) und eine im Leistungsfluß nach dem Wechselgetriebe (2) angeordnete Wendegetriebestufe (2) umfasst, wobei das Wechselgetriebe (1) zumindest ein Lastschaltelement (A, B, D, E, F) umfasst, und wobei die Wendegetriebestufe (2) mehrere Zahnräder (11, 12, 14) zur Realisierung einer Fahrtrichtungsumkehr, mindestens eine Schalteinrichtung (15), eine Abtriebswelle (16) zum Weiterleiten der Antriebsleistung zu Antriebsrädern (20, 21) des Fahrzeugs und einen permanent mit der Abtriebswelle (16) verbundenen Nebenantrieb (3) umfasst, **dadurch gekennzeichnet,**
**dass** das Verfahren einen Fahrmodus umfasst, bei dem eine Triebverbindung zwischen dem Hauptantriebsmotor (4) und der Abtriebswelle (16) an der Schalteinrichtung (15) getrennt ist, sodass das Fahrzeug lediglich über den Nebenantrieb (3) antreibbar ist, und dass zumindest ein Lastschaltelement (A, B, D, E, F) in dem Wechselgetriebe (1) zum Synchronisieren einer antriebsseitigen Drehzahl mit einer abtriebsseitigen Drehzahl an der Schalteinrichtung (15) in der Wendegetriebestufe (2) zumindest teilweise geschlossen wird, bevor die Triebverbindung an der Schalteinrichtung (15) geschlossen wird.

7. Verfahren nach Anspruch 6, **dadurch gekennzeichnet, dass** bei Betrieb in einem Fahrmodus bei welchem die Triebverbindung zwischen dem Hauptantriebsmotor (4) und der Abtriebswelle (16) an der Schalteinrichtung (15) verbunden ist, der Nebenantrieb (3) eine elektrische Maschine (17) antreibt, welche als Generator betrieben wird und Energie in eine Speichereinrichtung (24) oder eine Oberleitung speist, und dass bei Betrieb im Fahrmodus in welchem die Triebverbindung zwischen dem Hauptantriebsmotor (4) und der Abtriebswelle (16) an der Schalteinrichtung (15) getrennt ist, die elektrische Maschine (17) den Nebenantrieb (3) antreibt, wobei die elektrische Maschine (17) als Motor betrieben wird und Energie von der Speichereinrichtung (24) oder von der Oberleitung erhält.

8. Verfahren nach einem der Ansprüche 6 oder 7, **dadurch gekennzeichnet, dass** die elektrische Maschine (17) als Generator betrieben wird, wenn das Fahrzeug sich außerhalb eines Luftreinhaltungsgebietes und/oder Lärmschutzgebietes befindet und das Fahrzeug gebremst wird oder sich auf einer Gefällestrecke befindet.

9. Verfahren nach einem der Ansprüche 6 bis 8, **dadurch gekennzeichnet, dass** die elektrische Maschine (17) als Motor betrieben wird, wenn das Fahrzeug sich innerhalb eines Luftreinhaltungsgebietes oder Lärmschutzgebietes befindet und der Hauptantriebsmotor (4) abgeschaltet ist.

10. Verfahren nach einem der Ansprüche 6 bis 9, **dadurch gekennzeichnet, dass** die elektrische Maschine (17) als Motor betrieben wird, wenn das Fahrzeug sich außerhalb eines Luftreinhaltungsgebietes und/oder Lärmschutzgebietes befindet und der Hauptantriebsmotor (4) das Fahrzeug antreibt und das Fahrzeug sich in einer Steigung befindet.

## Claims

1. Drive arrangement for a vehicle with two equivalent directions of travel,
having a variable speed transmission (1) which comprises an input shaft (6) for introducing a drive power and at least one load switching element (A, B, D, E, F), having a reversing gear stage (2) which is arranged downstream of the variable speed transmission (1) in the power flow and comprises a plurality of gear wheels (11, 12, 14), at least one shifting device (15) and an output shaft (16),
and having at least one auxiliary drive (3) which is arranged at the reversing gear stage (2), wherein the auxiliary drive (3) is permanently connected to the output shaft (16) and can be disconnected from the gear wheels (11, 12, 14) of the reversing gear stage (2) using the shifting device (15), wherein the shifting device (15) is embodied as a positively locking shifting device with a first shifting position for a first direction of travel, a second shifting position for a second direction of travel and with a third shifting position, specifically a neutral position, **characterized in that** the drive arrangement comprises a control device (23) which is designed to synchronize a drive-side rotation speed and an output-side rotation speed at the positively locking shifting device (15) by way of the drive-side rotation speed being matched to the output-side rotation speed by partially closing the at least one load switching element (A, B, D, E, F) in the variable speed transmission (1).

2. Drive arrangement according to Claim 1, **characterized in that** the control device (23) only completely closes the at least one load switching element (A, B, D, E, F) when two clutch tooth systems (G, H) of the positively locking shifting device (15) which are to be connected are in engagement with one another.

3. Drive arrangement according to either of the preceding claims, **characterized in that** the auxiliary drive (3) can be connected to an electric machine (17) which can be operated as a motor and as a generator and can be connected to a storage device (24) or an overhead line.

4. Drive arrangement according to one of the preceding claims, **characterized in that** the auxiliary drive (3) can be connected to a hydraulic machine which can be operated as a motor and as a pump and can be connected to a storage device.

5. Drive arrangement according to one of the preceding claims, **characterized in that** the reversing gear stage (2) is formed independently of the variable speed transmission (1).

6. Method for operating a vehicle with two equivalent directions of travel, wherein the drive train of the vehicle comprises a main drive motor (4), a variable speed transmission (1) and a reversing gear stage (2) which is arranged downstream of the variable speed transmission (1) in the power flow, wherein the variable speed transmission (1) comprises at least one load switching element (A, B, D, E, F), and wherein the reversing gear stage (2) comprises a plurality of gear wheels (11, 12, 14) for implementing a reversal in the direction of travel, at least one shifting device (15), an output shaft (16) for forwarding the drive power to drive wheels (20, 21) of the vehicle and an auxiliary drive (3) which is permanently connected to the output shaft (16), **characterized**
**in that** the method comprises a driving mode in which a drive connection between the main drive motor (4) and the output shaft (16) is interrupted at the shifting device (15) so that the vehicle can be driven only by the auxiliary drive (3), and in that at least one load switching element (A, B, D, E, F) in the variable speed transmission (1) is at least partially closed for synchronizing a drive-side rotation speed with an output-side rotation speed at the shifting device (15) in the reversing gear stage (2) before the drive connection is closed at the shifting device (15).

7. Method according to Claim 6, **characterized in that**, during operation in a driving mode in which the drive connection between the main drive motor (4) and the output shaft (16) is connected at the shifting device (15), the auxiliary drive (3) drives an electric machine (17) which is operated as a generator and feeds energy into a storage device (24) or an overhead line, and **in that**, during operation in the driving mode in which the drive connection between the main drive motor (4) and the output shaft (16) is interrupted at the shifting device (15), the electric machine (17) drives the auxiliary drive (3), wherein the electric machine (17) is operated as a motor and obtains energy from the storage device (24) or from the overhead line.

8. Method according to either of Claims 6 and 7, **characterized in that** the electric machine (17) is operated as a generator when the vehicle is located outside an air pollution control zone and/or noise control zone and the vehicle is being braked or is on a downhill stretch of road.

9. Method according to one of Claims 6 to 8, **characterized in that** the electric machine (17) is operated as a motor when the vehicle is located within an air pollution control zone or noise control zone and the main drive motor (4) is switched off.

10. Method according to one of Claims 6 to 9, **characterized in that** the electric machine (17) is operated as a motor when the vehicle is located outside an air pollution control zone and/or noise control zone and the main drive motor (4) is driving the vehicle and the vehicle is located on an uphill slope.

## Revendications

1. Ensemble de propulsion pour un véhicule ayant deux sens de déplacement équivalents, comprenant
un mécanisme de changement de vitesse (1) qui comprend un arbre d'entrée (6) pour introduire une puissance d'entraînement et au moins un élément de commutation de charge (A, B, D, E, F),
un étage inverseur (2) disposé après le mécanisme de changement de vitesse (1) dans le circuit de puissance et qui comprend plusieurs roues dentées (11, 12, 14), au moins un dispositif de commutation (15) et un arbre de sortie (16),
et au moins une prise de force (3) disposée au niveau de l'étage inverseur (2), la prise de force (3) étant reliée en permanence à l'arbre de sortie (16) et pouvant être séparée des roues dentées (11, 12, 14) de l'étage inverseur (2) par le dispositif de commutation (15), le dispositif de commutation (15) étant réalisé sous la forme d'un dispositif de commutation craboté ayant une première position de commutation pour un premier sens de déplacement, une deuxième position de commutation pour un deuxième sens de déplacement, et une troisième position de commutation, notamment une position neutre,
**caractérisé en ce que** l'ensemble de propulsion comprend un dispositif de commande (23) qui est conçu pour synchroniser une vitesse de rotation côté entraînement et une vitesse de rotation côté sortie au niveau du dispositif de commutation craboté (15) **en ce que** la vitesse de rotation côté entraînement est adaptée à la vitesse de rotation côté sortie par une fermeture partielle du au moins un élément de commutation de charge (A, B, D, E, F) dans le mécanisme de changement de vitesse (1).

2. Ensemble de propulsion selon la revendication 1, **caractérisé en ce que** le dispositif de commande (23) ne ferme complètement ledit au moins un élément de commutation de charge (A, B, D, E, F) que si deux dentures d'embrayage (G, H) à relier du dispositif de commutation craboté (15) sont en prise l'une avec l'autre.

3. Ensemble de propulsion selon l'une quelconque des revendications précédentes, **caractérisé en ce que** la prise de force (3) peut être reliée à une machine électrique (17) qui peut fonctionner comme moteur et comme générateur, et peut être reliée à un dispositif accumulateur (24) ou à une caténaire.

4. Ensemble de propulsion selon l'une quelconque des revendications précédentes, **caractérisé en ce que** la prise de force (3) peut être reliée à une machine hydraulique qui peut fonctionner comme moteur et comme pompe, et peut être reliée à un dispositif accumulateur.

5. Ensemble de propulsion selon l'une quelconque des revendications précédentes, **caractérisé en ce que** l'étage inverseur (2) est réalisé indépendamment du mécanisme de changement de vitesse (1).

6. Procédé permettant de faire fonctionner un véhicule ayant deux sens de déplacement équivalents, dans lequel la chaîne cinématique du véhicule comprend un moteur d'entraînement principal (4), un mécanisme de changement de vitesse (1) et un étage inverseur (2) disposé après le mécanisme de changement de vitesse (1) dans le circuit de puissance, le mécanisme de changement de vitesse (1) comprenant au moins un élément de commutation de charge (A, B, D, E, F), et dans lequel l'étage inverseur (2) comprend plusieurs roues dentées (11, 12, 14) pour réaliser une inversion de sens de déplacement, au moins un dispositif de commutation (15), un arbre de sortie (16) pour retransmettre la puissance d'entraînement aux roues motrices (20, 21) du véhicule et une prise de force (3) reliée en permanence à l'arbre de sortie (16),
**caractérisé en ce que** le procédé comprend un mode de déplacement dans lequel une liaison de propulsion entre le moteur d'entraînement principal (4) et l'arbre de sortie (16) est séparée au niveau du dispositif de commutation (15) de sorte que le véhicule ne peut être entraîné que par la prise de force (3), et **en ce qu'**au moins un élément de commutation de charge (A, B, D, E, F) dans le mécanisme de changement de vitesse (1) est fermé au moins partiellement pour synchroniser une vitesse de rotation côté entraînement avec une vitesse de rotation côté sortie au niveau du dispositif de commutation (15) à l'étage inverseur (2) avant que la liaison de propulsion avec le dispositif commutation (15) ne soit fermée.

7. Procédé selon la revendication 6, **caractérisé en ce que** pour un fonctionnement dans un mode de déplacement dans lequel la liaison de propulsion entre le moteur d'entraînement principal (4) et l'arbre de sortie (16) est reliée au dispositif de commutation (15), la prise de force (3) entraîne une machine électrique (17) qui fonctionne comme générateur et fournit de l'énergie à un dispositif accumulateur (24) ou à une caténaire, et **en ce que** pour le fonctionnement dans le mode de déplacement dans lequel la liaison de propulsion entre le moteur d'entraînement principal (4) et l'arbre de sortie (16) est séparée au niveau du dispositif de commutation (15), la machine électrique (17) entraîne la prise de force (3), la machine électrique (17) fonctionnant comme moteur et recevant de l'énergie du dispositif accumulateur (24) ou de la caténaire.

8. Procédé selon l'une quelconque des revendications 6 ou 7, **caractérisé en ce que** la machine électrique (17) fonctionne comme générateur lorsque le véhicule se trouve en dehors d'une zone de protection de l'air et/ou d'une zone de protection contre le bruit et le véhicule est freiné ou se trouve sur une descente.

9. Procédé selon l'une quelconque des revendications 6 à 8, **caractérisé en ce que** la machine électrique (17) fonctionne comme moteur si le véhicule se trouve à l'intérieur d'une zone de protection de l'air ou d'une zone de protection contre le bruit et le moteur d'entraînement principal (4) est coupé.

10. Procédé selon l'une quelconque des revendications 6 à 9, **caractérisé en ce que** la machine électrique (17) fonctionne comme moteur si le véhicule se trouve en dehors d'une zone de protection de l'air et/ou d'une zone de protection contre le bruit et le moteur d'entraînement principal (4) entraîne le véhicule, et le véhicule se trouve sur une montée.
